# EUROPÄISCHE PATENTSCHRIFT

(11) **EP 0 702 160 B1**
(45) Veröffentlichungstag und Bekanntmachung des Hinweises auf die Patenterteilung: **07.01.1998**
(21) Anmeldenummer: 95810505.8
(22) Anmeldetag: 10.08.1995
(51) Int. Cl.: F16B 37/04

(54) **Befestigungsmutter für Profilschienen**
Nut for profiles
Ecrou pour profilés

(30) Priorität: 16.09.1994 DE 4432996
(43) Veröffentlichungstag der Anmeldung: 20.03.1996
(73) Patentinhaber: HILTI Aktiengesellschaft, 9494 Schaan (LI)
(72) Erfinder: Höfle, Siegfried, Dipl.-Ing., A-6840 Götzis (AT)
(74) Vertreter: Wildi, Roland

(56) Entgegenhaltungen:
- US-A- 1 528 777
- US-A- 3 493 025
- US-A- 4 263 952
- US-A- 5 209 619

## Beschreibung

Die Erfindung betrifft eine Befestigungsmutter gemäss dem Oberbegriff des Patentanspruchs 1.

Eine Befestigungsmutter der genannten Art ist aus der US-PS 3,493,025 bekannt und dient der Festlegung von Bauteilen an Profilschienen, deren Querschnitt im wesentlichen C-förmig ausgebildet ist, wobei zwei Schenkel der Profilschiene parallel zueinander verlaufend, in das Innere der Profilschiene ragen. Das Basisteil befindet sich dabei innerhalb der Profilschiene und ist im vormontierten Zustand innerhalb der Profilschiene axial versetzbar. Ein mit dem Basisteil in Verbindung stehender Halteeinsatz stützt sich an der Aussenseite der Profilschiene im Mündungsbereich einer von den beiden Schenkeln begrenzten, schlitzartigen Öffnung ab.

Das Basisteil besitzt eine unrunde Aussenkontur, wobei die geringste Erstreckung der Aussenkontur kleiner ist, als die rechtwinklig zur Längiserstreckung der Profilschiene gemessene Breite der schlitzartigen Öffnung. Eine zentrale Durchgangsbohrung mit einem Kraftangriffsmittel in Form eines Innengewindes und zwei parallel zueinander verlaufende, verzahnte Bereiche, die mit den freien Enden der Schenkel zusammenwirken, wenn die Befestigungsmutter nach dem Einsetzen in die Profilschiene um 90° in ihre Vormontageposition verdreht wird, sind ebenfalls an dem Basisteil angeordnet.

Der Halteeinsatz verfügt über einen zentralen, axial fest mit dem Basisteil in Verbindung stehenden ersten Bereich und einen elastischen, kragenförmigen zweiten Bereich, der sich im Bereich der schlitzartigen Öffnung an der äusseren Oberfläche der Profilschiene abstützt. Der Halteeinsatz besitzt eine zentrale Durchtrittsöffnung, die im wesentlichen gleich gross ist wie der Durchmesser der Durchgangsbohrung des Basisteiles bzw. wie der Schaft einer Spannschraube, die durch die zentrale Durchtrittsöffnung des Halteeinsatzes in die zentrale Durchgangsbohrung des Basisteiles ragt und der Festlegung eines Bauteiles an der Profilschiene dient.

Diese bekannte Befestigungsmutter besitzt den Nachteil, dass die Verdrehung der Befestigungsmutter zur Vormontage an der Profilschiene von Hand schwierig ist, da die Befestigungsmutter schwer fassbar ist. Ein weiterer Nachteil besteht darin, dass sich beim Festziehen der Spannschraube die Befestigungsmutter verdreht, so dass sie sich aus der vormontierten Stellung löst, indem das Basisteil an den freien Enden der Schenkel der Profilschiene nicht mehr anliegt.

In der dem Erfindungsgegenstand am nächsten kommenden US-A4,263,952 ist eine Befestigungsmutter beschrieben, die ein Basisteil und einen damit verbundenen, elastischen Halteeinsatz umfasst. Eine im Basisteil axial verlaufende Bohrung mit einem Innengewinde dient als Lastangriffsmittel. An einer Längsseite des Halteeinsatzes ist ein Sperrlappen schwenkbar angelenkt. Der schwenkbare Sperrlappen bietet eine gewisse Sicherung gegenüber einem unbeabsichtigten Verdrehen der Befestigungsmutter beim Einschrauben einer Befestigungsschraube. Wegen der geringen Breite des Sperrlappens ist diese Sicherung jedoch nur in Eindrehrichtung der Schraube wirksam. Beim Lösen der Befestigungsschraube kann es vorkommen, dass sich die Befestigungsmutter verdreht und sich aus der vormontierten Stellung löst. Ein weiterer wesentlicher Nachteil dieser bekannten Befestigungsmutter besteht darin, dass ihre Vormontage an einer Schiene von Hand nur relativ umständlich erfolgen kann, da sie sehr schwer fassbar ist.

Der Erfindung liegt die Aufgabe zugrunde, eine Befestigungsmutter zu schaffen, die sich beim Einsetzen in eine Profilschiene von Hand einfach verdrehen lässt, sich beim Festziehen einer Spannschraube nicht mitdreht und wirtschaftlich herstellbar ist.

Erfindungsgemäss wird die Aufgabe dadurch gelöst, dass die Breite des Sperrlappens im wesentlichen der Quererstreckung des Basisteiles entspricht und von der dem Basisteil abgewandten Seite des Sperrlappens ein Vorsprung abragt.

Der Sperrlappen ist am Halteeinsatz angeordnet und bildet eine den Halteeinsatz vergrössernde Angriffsfläche, die ein leichteres Erfassen von Hand und somit ein leichtes Verdrehen des Halteeinsatzes zusammen mit dem Basisteil ermöglichen. Wird der Sperrlappen in die schlitzartige Oeffnung der Profilschiene hineingebogen, so bildet er eine Sicherung gegen Verdrehen der Befestigungsmutter.

Der Vorsprung überragt die von dem Basisteil abgewandte Seite des Halteeinsatzes, bildet eine Angriffsfläche, die von Hand gefasst werden kann und somit eine bessere Verdrehung der Befestigungsmutter ermöglicht.

Indem in einer vorteilhaften Ausführungsvariante der Erfindung zwei Sperrlappen an gegenüberliegenden Längsseiten des Basisteils schwenkbar angelenkt sind, wird die Handhabbarkeit der Befestigungsmutter noch weiter verbessert. Die von den Oberseiten beider Sperrlappen abragenden Vorsprünge ermöglichen es, die Befestigungsmutter noch besser zu fassen, um sie für die Vormontage an einer Schiene zu verdrehen. Beim Aufsetzen eines Bauteils auf die Profilschiene werden die Sperrlappen über die Vorsprünge automatisch in die schlitzartige Öffnung Schiene geschwenkt und bilden zu beiden Längsseiten des Basisteils Sicherungen gegen ein unbeabsichtigtes Verdrehen der Befestigungsmutter.

Damit ein leichtes Verschwenken der Sperrlappen erreicht wird, weist der Halteeinsatz vorzugsweise im Bereich der Schwenkachsen eine dünnere Wandstärke auf. Die Reduzierung der Wandstärke wird erreicht mit einer in Längsrichtung der Schwenkachse verlaufenden Vertiefung an jener Seite des Halteeinsatzes, die dem Basisteil zugewandt ist.

Damit der Halteeinsatz beim Aufsetzen des Bauteiles auf die Profilschiene keine Zwischenlage zwischen dem Bauteil und der Profilschiene bildet, nimmt die Wandstärke des Halteeinsatzes zweckmässigerweise in Längsrichtung des Basisteiles zum freien Ende hin ab. Die Wandstärke verjüngt sich dabei gegen Null, wobei die Verjüngung an jener Seite des Halteeinsatzes erfolgt, die dem Basisteil zugewandt ist. Die Verjüngung kann beispielsweise auf den Mündungsbereich der schlitzartigen Oeffnung abgestimmt sein, so dass die Wandstärke des Halteeinsatzes über der schlitzartigen Öffnung konstant ist und darüber hinausgehend sich verjüngt.

Die Erfindung wird anhand von Zeichnungen, die ein Ausführungsbeispiel wiedergeben, näher erläutert. Es zeigen:
- Fig. 1: eine erfindungsgemässe Befestigungsmutter mit Halteeinsatz im Zusammenwirken mit einer Profilschiene, teilweise geschnitten;
- Fig. 2: eine Draufsicht auf die Profilschiene, den Halteeinsatz und das Basisteil gemäss Fig. 1, teilweise geschnitten;
- Fig. 3: einen Schnitt durch das Basisteil mit Halteeinsatz und Profilschiene entlang der Linie III-III in Fig. 2.

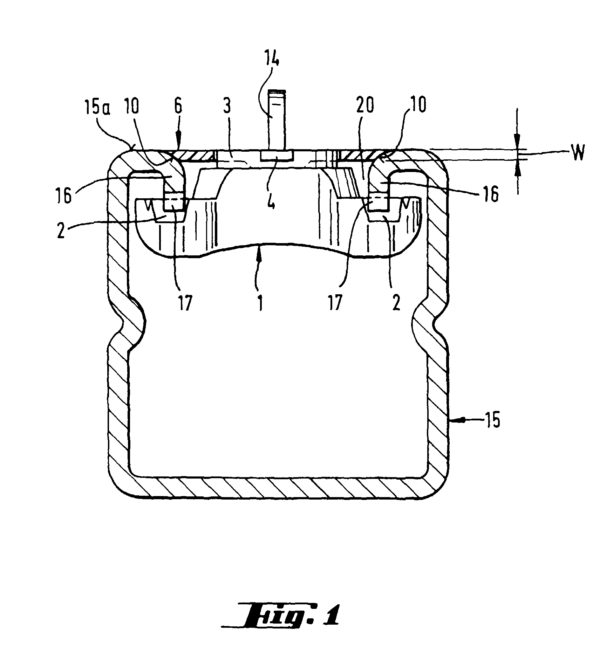

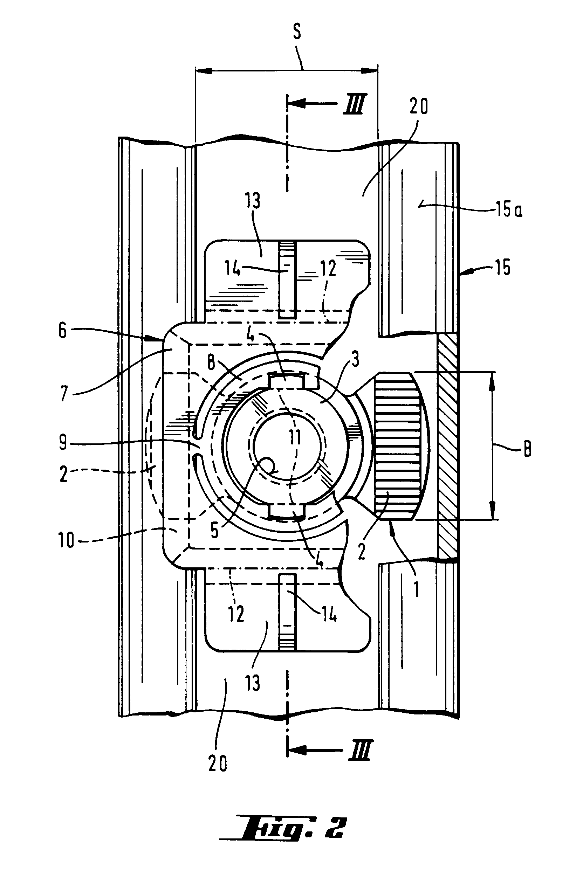

In den Fig. 1 bis 3 ist eine Befestigungsmutter mit Basisteil 1 und damit verbundenem, elastischen Halteeinsatz 6 dargestellt. Das Basisteil 1 weist einen unrunden Kopf, eine zentrale Durchgangsbohrung mit einem Innengewinde 5 und zwei parallel zueinander verlaufende, verzahnte Bereiche 2 auf. Koaxial zur Durchgangsbohrung verläuft ein zylindrischer Ansatz 3, auf dem der axial federnde Halteeinsatz 6 sitzt. Der axialen und drehfesten Festlegung des Halteeinsatzes 6 an dem Basisteil 1 dienen radiale, vorstehende Haken 4 am zylindrischen Ansatz 3 des Basisteiles 1, die hinter Anschlagkanten 11 des Halteeinsatzes 6 greifen können. Die Anschlagkanten 11 sind Teil eines Innenringes 8, der in der gleichen Ebene angeordnet ist wie ein den Innenring 8 umgebender Aussenring 7, der über zwei einander diametral gegenüberliegende Verbindungsstege 9 mit dem Innenring 8 elastisch verbunden ist. Die Haken 4 bzw. Anschlagkanten 11 sind wie die Verbindungsstege 9 einander diametral gegenüberliegend, gegenüber den Verbindungsstegen 9 jedoch um 90° versetzt angeordnet.

Die Wandstärke W des Aussenringes 7 des Halteeinsatzes 6 verjüngt sich auf wenigstens zwei einander diametral gegenüberliegenden Seiten zum freien Ende hin.

Die Verjüngung 10 ist dabei so ausgebildet, dass sich die dem Basisteil 1 zugewandte Seite des Halteeinsatzes 6 zu jener Seite hin gegen Null verjüngt, die von dem Basisteil 1 abgewandt ist.

An dem Aussenring 7 des Halteeinsatzes 6 schliessen sich zwei Sperrlappen 13 an, die sich ebenfalls diametral gegenüberliegen. Von jener Seite der Sperrlappen 13, die dem Basisteil 1 gegenüberliegen, ragen Vorsprünge 14 ab, die ein besseres manuelles Verdrehen des Basisteiles 1 zusammen mit dem axial fedemden Halteeinsatz 6 ermöglichen. Der besseren Griffigkeit der Vorsprünge 14 dient eine Oberflächenprofilierung. Die parallel zur Längserstreckung des Basisteiles 1 verlaufende Breite der Sperrlappen 13 ist kleiner als die Breite S der schlitzartigen Öffnung 20 der Profilschiene 15. Die Sperrlappen 13 sind um parallel zur Längserstreckung des Basisteiles 1 verlaufende Schwenkachsen 12 schwenkbar. Um die Schwenkbarkeit erreichen zu können, besitzt der Halteeinsatz 6 im Bereich der Schwenkachsen 12 halbkreisförmige Vertiefungen, die an jener Seite des Aussenringes 7 angeordnet sind, die dem Basisteil 1 zugewandt ist.

Die erfindungsgemässe Befestigungsmutter dient beispielsweise der Festlegung von Bauteilen 18 oder Rohrleitungen an einer C-förmig ausgebildeten Profilschiene 15, die eine in Längsrichtung verlaufende, schlitzartige Oeffnung 20 aufweist. Die Breite S der schlitzartigen Oeffnung 20 ist durch zwei Schenkel 16 begrenzt, die parallel zueinander in die Profilschiene hinein abgebogen sind. Die Schenkel 16 sind an ihren freien Enden mit einer zahnförmigen Profilierung 17 versehen und die komplementär dazu ausgebildeten verzahnten Bereiche 2 befinden sich an dem Basisteil 1.

Wird das Basisteil 1 mit der Breite B mit dem Halteeinsatz 6 durch die schlitzartige Oeffnung 20 in die Profilschiene 15 hineingesteckt und um 90° verdreht, so befindet sich die Befestigungsmutter, wie in den Fig. 1 bis 3 dargestellt, in einer vormontierten Position. Vom abgerundeten Mündungsbereich der schlitzartigen Oeffnung 20 werden die Sperrlappen 13 geringfügig nach oben gedrückt, so dass die Sperrlappen 13 während des Verdrehens der Befestigungsmutter auf der Oberfläche der Profilschiene 15 entlanggleiten. Während des Verdrehens gelangen die an dem Basisteil 1 angeordneten Einführschrägen im Bereich der verzahnten Bereiche 2 mit den Schenkeln 16 der Profilschiene 15 in Berührung. Ueber die Einführschrägen werden das Basisteil 1 und der Innenring 8 gegenüber dem Aussenring 7 des Halteeinsatzes 6 axial auseinanderbewegt. Dadurch erfährt der Halteeinsatz 6 eine Vorspannung. Ist die in den Fig. 1 bis 3 dargestellte Lage der Befestigungsmutter 1 erreicht, so greift der verzahnte Bereich 2 des Basisteiles 1 in die an den Schenkeln 16 angeordnete zahnförmige Profilierung 17 der Profilschiene 15. Gleichzeitig erfolgt eine axiale Versetzung des Basisteiles 1 in die entgegengesetzte Richtung zu den Schenkeln 16 hin, um wenigstens den Betrag der Zahnhöhe des Zahnprofils. In dieser Lage ist der Halteeinsatz 6 axial vorgespannt.

Der Aussenring 7 des Halteeinsatzes liegt mit seinem verjüngten Bereich im Mündungsbereich der schlitzartigen Oeffnung 20 an, so dass die dem Basisteil 1 abgewandte Seite des Halteeinsatzes 6 die Oberfläche der Profilschiene 15 nicht oder nur wenig überragt.

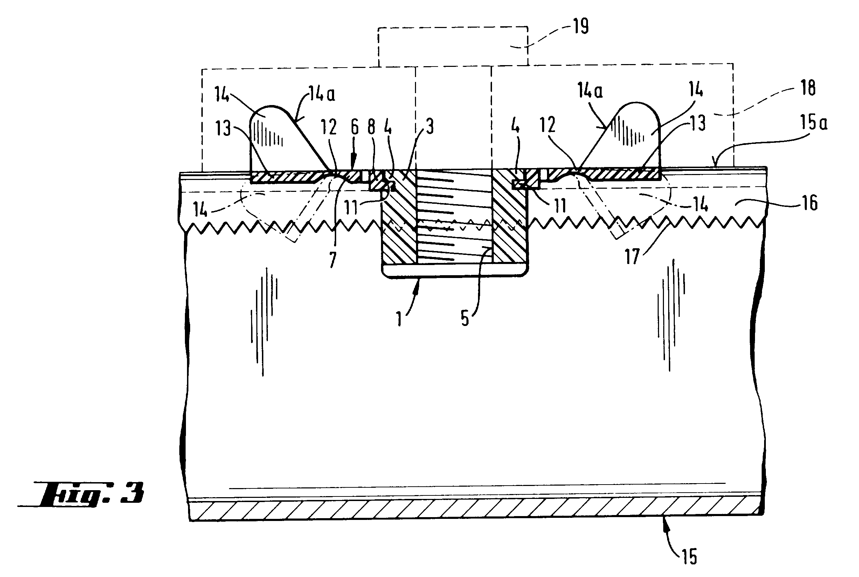

Nach der erfolgten Vormontage der Befestigungsmutter an der Profilschiene 15 kann, wie in Fig. 3 strichliert angedeutet, ein Bauteil 18 auf die Profilschiene 15 aufgesetzt werden, wobei die Anschlagfläche 14a des Vorsprunges 14 des Halteeinsatzes 6 mit der Unterseite des Bauteiles 18 in Berührung kommt. Dabei werden die Sperrlappen 13 mit den Vorsprüngen 14 in die schlitzartige Oeffnung 20 der Profilschiene 15 um die Schwenkachsen 12 hineingebogen, bis die Anschlagflächen 14a parallel zur Oberfläche 15a der Profilschiene 15 ausgerichtet sind. Mit Hilfe der Sperrlappen 13 wird erreicht, dass sich die Befestigungsmutter 1 beim Anziehen eines Befestigungselementes 19 in Form einer Spannschraube, die in das Innengewinde 5 des Basisteiles 1 greift, nicht mehr verdreht.

## Patentansprüche

1. Befestigungsmutter mit einem Basisteil (1) und einem damit verbundenen, elastischen Halteeinsatz (6), wobei das Basisteil (1) ein Kraftangriffsmittel aufweist und der Halteeinsatz (6) mit wenigstens einem Sperrlappen (13) ausgestattet ist, der an einer Längsseite des Halteinsatzes angelenkt und um eine parallel zur Längserstreckung des Halteinsatzes (6) verlaufende Schwenkachse (12) schwenkbar ist, **dadurch gekennzeichnet**, dass eine parallel zur Schwenkachse (12) gemessene Breite des Sperrlappens (13) im wesentlichen der senkrecht zur Schwenkrichtung verlaufenden Quererstreckung (B) des Basisteils (1) entspricht und von der dem Basisteil (1) abgewandten Seite des Sperrlappens (13) ein Vorsprung (14) abragt.

2. Befestigungsmutter nach Anspruch 1, dadurch gekennzeichnet, dass der Halteeinsatz (6) zwei Sperrlappen (13) aufweist, die an gegenüberliegenden Längsseiten des Halteeinsatzes (13) schwenkbar angelenkt sind.

3. Befestigungsmutter nach Anspruch 1 oder 2, dadurch gekennzeichnet, dass der Halteeinsatz (6) im Bereich der Schwenkachsen (12) eine dünnere Wandstärke (W) aufweist.

4. Befestigungsmutter nach einem der Ansprüche 1 bis 3, dadurch gekennzeichnet, dass die Wandstärke (W) des Halteeinsatzes (6) in Längsrichtung des Basisteiles (1) zum freien Ende hin abnimmt.

## Claims

1. Fixing nut with a base part (1) and a thereto connected elastic holding insert (6), and the base part (1) comprises a force engagement means and the holding insert (6) is fitted with at least one blocking web (13) which is hinged onto a longitudinal side of the holding insert and pivotal around a pivotal axis (12) which extends parallel to the longitudinal extent of the holding insert (6), **characterised in that** a width of the blocking web (13) measured parallel to the pivotal axis (12) corresponds essentially with the transverse extent (B), which extends vertically to the pivotal direction, of base part (1), and a protrusion (14) extends from the side of the blocking web (13) facing away from the base part (1).

2. Fixing nut according to Claim 1, **characterised in that** the holding insert (6) comprises two blocking webs (13) which are pivotally hinged on opposite longitudinal sides of the holding insert (13).

3. Fixing nut according to Claim 1 or 2, **characterised in that** the holding insert (6) has a thinner wall thickness (W) in the area of the pivotal axes (12).

4. Fixing nut according to one of Claims 1 to 3, **characterised in that** the wall thickness (W) of the holding insert (6) decreases in the longitudinal direction of the base part (1) towards the free end.

## Revendications

1. Ecrou de fixation, comprenant un élément de base (1) auquel est rattaché un insert de retenue élastique (6), l'élément de base (1) comportant un moyen d'application de force et l'insert de retenue (6) étant pourvu d'au moins une patte de blocage (13) laquelle est articulée sur l'un des grands côtés de l'insert de retenue et peut pivoter autour d'un axe de pivotement (12) orienté parallèlement à l'extension longitudinale de l'insert de retenue (6), **caractérisé en ce** qu'une largeur de la patte de blocage (13) mesurée parallèlement à l'axe de pivotement (12) correspond sensiblement à l'extension transversale (B) de l'élément de base (1) orientée perpendiculairement à la direction de pivotement, et qu'une saillie (14) dépasse du côté de la patte de blocage (13) opposé à l'élément de base (1).

2. Ecrou de fixation selon la revendication 1, caractérisé en ce que l'insert de retenue (6) comporte deux pattes de blocage (13) qui sont articulées de manière pivotante sur des grands côtés opposés de l'insert de retenue (13).

3. Ecrou de fixation selon la revendication 1 ou 2, caractérisé en ce que l'insert de retenue (6) présente dans la région des axes de pivotement (12) une épaisseur de paroi (W) plus faible.

4. Ecrou de fixation selon l'une des revendications 1 à 3, caractérisé en ce que l'épaisseur de paroi (W) de l'insert de retenue (6) diminue en direction de l'extrémité libre dans le sens longitudinal de l'élément de base (1).
